# EUROPÄISCHE PATENTSCHRIFT

(11) **EP 3 433 101 B1**
(45) Veröffentlichungstag und Bekanntmachung des Hinweises auf die Patenterteilung: **12.01.2022**
(21) Anmeldenummer: 17703693.6
(22) Anmeldetag: 31.01.2017
(51) Int. Cl.: B42D 25/455, B32B 37/02, B32B 37/00, B42D 25/45, G06K 19/02, B42D 25/46

(54) **VERFAHREN ZUR HERSTELLUNG EINES FOLIENVERBUNDES AUS MEHREREN MATERIALBAHNEN FÜR EIN WERT- ODER SICHERHEITSDOKUMENT**
METHOD FOR PRODUCING A FILM COMPOSITE MADE OF MULTIPLE MATERIAL WEBS FOR A VALUE OR SECURITY DOCUMENT
PROCÉDÉ POUR PRODUIRE UN STRATIFIÉ CONSTITUÉ DE PLUSIEURS BANDES DE MATIÈRE POUR UN DOCUMENT DE VALEUR OU DE SÉCURITÉ

(30) Priorität: 21.03.2016 DE 102016105157
(43) Veröffentlichungstag der Anmeldung: 30.01.2019
(73) Patentinhaber: Bundesdruckerei GmbH, 10969 Berlin (DE)
(72) Erfinder: KULIKOVSKY, Lazar, 14165 Berlin (DE); WILKE, Andreas, 13509 Berlin (DE); KULIKOVSKA, Olga, 14165 Berlin (DE)
(74) Vertreter: Mammel und Maser
(86) Internationale Anmeldenummer: PCT/EP2017/052030
(87) Internationale Veröffentlichungsnummer: WO 2017/162356

(56) Entgegenhaltungen:
- WO-A1-2014/076046
- DE-A1-102005 062 396
- DE-A1-102012 019 308
- US-A1- 2014 224 881

## Beschreibung

Die Erfindung betrifft ein Verfahren zur Herstellung eines Folienverbundes aus mehreren Materialbahnen für ein Wert- oder Sicherheitsdokument gemäß dem Oberbegriff des Patentanspruchs 1.

Bei der Herstellung von Sicherheitsdokumenten werden mehrere Polymerfolien zu einem Folienverbund laminiert. Dabei werden die Polymerfolien bei Raumtemperatur übereinanderliegend geschichtet und anschließend einer Laminationsvorrichtung zugeführt. Eine solche Laminationsvorrichtung besteht aus einer Anordnung von zwei parallel zueinander ausgerichteten Ober- und Unterwerkzeuge, die aufgeheizt werden. Jedes Ober- und Unterwerkzeug umfasst ein Presspolster und ein Laminationsblech. Zwischen den Laminationsblechen ist der Stapel von Polymerfolien zur Bildung des Folienverbundes positioniert. Hierzu werden die beheizten Platten unter Druck zusammengefahren bis Luft aus dem Folienverbund entweicht und ein großflächiger Kontakt der einzelnen Materialbahnen zueinander entsteht. Unter Druck wird dem Stapel der Polymerfolien so lange Wärmeenergie zugeführt, bis die Glasübergangstemperatur der Polymerfolien erreicht wird, so dass sich die Oberflächen der einzelnen Materialbahnen verbinden und eine Lamination der Polymerfolien miteinander zu einem Folienverbund erfolgt. Ein solcher Laminationsprozess weist den Nachteil auf, dass die Taktzeit für die Herstellung für einen solchen Folienverbund durch die Prozessdauer zum Einbringen der Wärmeenergie für das anschließende Verschweißen der Oberfläche der Polymerfolien zu einem Folienverbund beschränkt ist.

Aus der US 2014/0224881 A1 ist der Aufbau einer Karte, wie beispielsweise einer Kreditkarte oder einer Plastikkarte, für ein Identifikationsdokument oder dergleichen bekannt, welche eine verbesserte Festigkeit aufweist. Zur Herstellung dieser Karte wird ein Kernverbund aus mehreren Schichten sowie zumindest ein weiterer Verbund aus mehreren Schichten für eine äußere Beschichtungslage gebildet. Beidseitig zum Kernverbund wird jeweils ein äußerer Verbund aus mehreren Schichten zusammengeführt und laminiert.

Aus der DE 17 04 784 A ist ein Verfahren zum Laminieren von zwei Kunststoffbahnen bekannt, bei welchen die miteinander zu verbindenden Kunststoffoberflächen mittels Strahlungswärme aufgeheizt werden, so dass anschließend beim Hindurchführen der beiden miteinander zu verbindenden Materialien durch einen Spalt eines Walzenpaares ein Laminieren erfolgt. Dabei ist das Heizelement unmittelbar dem Walzenspalt der beiden Laminierwalzen zugeordnet, so dass kurz vor dem Zuführen der beiden Materialbahnen in den Walzenspalt ein Aufschmelzen der Kunststoffbahnen erfolgt. Dieses Verfahren weist den Nachteil auf, dass nur zwei Materialbahnen miteinander verbunden werden können und sofern weitere Materialschichten aufzutragen sind, der vorbeschriebene Laminationsprozess mehrfach aufeinanderfolgend wiederholt werden muss. Aus der DE 10 2012 019 308 A1 ist ein Verfahren zur Herstellung eines gewebeverstärkten Inlays bekannt. Dieses Inlay besteht aus einer Kunststofffolie als Kernfolie. Eine vorgewärmte Gewebeschicht wird jeweils einer Oberseite und einer Unterseite der Kunststofffolie zugeführt und in einem Laminierbereich zwischen den Heiz- und Kühlwalzenanordnungen zusammengeführt und unter Druck und Wärme miteinander verbunden.

Der Erfindung liegt die Aufgabe zugrunde, ein Verfahren zur Herstellung eines Folienverbundes aus mehreren Materialbahnen für ein Wert- oder Sicherheitsdokument zu schaffen, bei welchem der Herstellungsprozess beschleunigt wird.

Diese Aufgabe wird durch ein Verfahren zur Herstellung eines Folienverbundes aus mehreren Materialbahnen für ein Wert- oder Sicherheitsdokument gemäß dem Anspruch 1 gelöst., Diese Aufteilung der Herstellung des Folienverbundes in wenigstens zwei Laminationsschritte weist den Vorteil auf, dass die thermische Masse der zu laminierenden Materialbahnen reduziert wird. Beispielsweise können in einem ersten Laminationsschritt nur wenige Materialbahnen laminiert werden, wodurch ein kleineres Volumen der Materialbahnen für den Laminierprozess durchgeheizt werden braucht. Dadurch können auch unterschiedliche Schichten spezifisch erwärmt werden, so dass eine inhomogene Erhitzung bei einer Vielzahl von Materialbahnen oder allen Materialbahnen für den Folienverbund während eines Laminationsprozesses vermieden wird. In zumindest einem nachgeschaltenen oder einen zweiten Laminationsschritt kann der bereits vorgewärmte Kartenkernverbund mit den weiteren Materialbahnen zusammengeführt und gemeinsam in einer Laminationsvorrichtung zum Folienverbund laminiert werden. Insbesondere bei der Verwendung von eingebauten elektronischen Komponenten auf einer Materialbahn ist es von Vorteil, in einem ersten Laminationsschritt in einem Vorlaminator einen Kartenkernverbund auszugestalten, der diese elektronischen Komponenten umfasst, so dass beispielsweise die Laminationstemperatur spezifisch auf die nur zwei Schichten und auf die Temperatursensibilität der eingebauten elektronischen Komponenten eingestellt werden kann. Bevorzugt ist vorgesehen, dass das zumindest eine Heizelement zwischen der letzten Transportwalze in Transportrichtung gesehen vor der Laminationsvorrichtung und dem Walzenpaar positioniert wird und die aufzuheizende Oberflächen der Materialbahn freischwebend an dem Heizelement vorbeigeführt wird. Dies ermöglicht, dass Materialbahnen in unterschiedlicher Dicke und/oder Steifigkeit gleichermaßen zugeführt und aufgeheizt werden können. Insbesondere bei der Zuführung einer Materialbahn, welche mit zumindest einer elektronischen Komponente bestückt ist, gilt es eine starke Biegung oder Umlenkungen der Materialbahn zu vermeiden. Durch eine solche Anordnung wird das Zuführen einer solchen Materialbahn begünstigt.

Das Verfahren sieht vor, dass bei der Zuführung von mehreren Materialbahnen zwischen zwei benachbarten Materialbahnen zumindest ein Heizelement positioniert wird, durch welches die aufeinander zuweisenden Oberflächen der Materialbahnen, die darauffolgend miteinander laminiert werden, vorgewärmt werden. Dies weist den Vorteil auf, dass beide Oberflächen der Materialbahnen in gleichem Maße mit der Wärmeenergie beaufschlagt werden, so dass gleichmäßige Bedingungen für die nachfolgende Lamination geschaffen werden können.

Zur Bildung des Folienverbundes werden bevorzugt zwei oder mehrere Materialbahnen aus einem thermoplastischen Elastomer, insbesondere Polycarbonat oder Derivaten von Polycarbonat zugeführt und die Oberfläche dieser Materialbahnen wird auf eine Temperatur aufgeheizt, die der Glasübergangstemperatur der jeweiligen Materialbahn entspricht oder höher ist. Dadurch kann ein Anschmelzen oder Aufschmelzen zumindest der Oberfläche der jeweiligen Materialbahnen erzielt werden. Dies begünstigt und beschleunigt anschließend die Lamination der Materialbahnen zu dem Folienverbund.

Eine bevorzugte Ausführungsform des Verfahrens sieht vor, dass der Folienverbund aus einem Kartenkernverbund und mehreren Materialbahnen ausgebildet wird, wobei der Kartenkernverbund aus wenigstens zwei Materialbahnen besteht, wobei eine Materialbahn bevorzugt mit zumindest einer elektronischen Komponente, insbesondere einem Sensor, einem IC-Modul oder einem RFID, bestückt ist, die in einem Vorlaminator miteinander laminiert werden und zumindest eine weitere Materialbahn als Schutzschicht oder Deckschicht auf die Materialbahn mit der zumindest einen elektrischen Komponente aufgebracht wird. Somit kann dieses Verfahren zur Bildung eines Teilverbundes beziehungsweise Kartenkernverbunds aus mehreren Schichten oder Materialbahnen laminiert werden, die zumindest eine Schicht oder Materialbahn weniger aufweisen als der Folienverbund. Vorzugsweise kann der Kartenkernverbund beispielsweise eine Datenseite mit Personalisierdaten und vorzugsweise zumindest eine elektrische Komponente, insbesondere ein IC-Modul, umfassen. Solche IC-Module bestehen aus einer Antenne und einem Chip. Dieser Kartenkernverbund oder Teilverbund kann wiederum mit mehreren weiteren Materialbahnen zu einem mehrschichtigen Folienverbund als Wert- und/oder Sicherheitsdokument wie vorstehend beschrieben laminiert werden.

Die einzeln vorgewärmten Materialbahnen, welche über das zumindest eine Walzenpaar zusammengeführt oder zusammengepresst werden, können durch einen Platten- oder Rollenlaminator zu einem Folienverbund laminiert werden.

Zum Vorwärmen der Oberflächen der zu laminierenden Materialbahnen wird als Heizelement bevorzugt eine Infrarot-Strahlungsvorrichtung oder ein Heißluftgebläse eingesetzt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Darstellung eines Laminationsprozesses mit zwei Laminierschritten,
- Figur 2: eine schematische Ansicht zur Herstellung eines Folienverbundes aus mehreren Materialbahnen in einer Laminationsvorrichtung, und
- Figur 3: eine alternative Ausführungsform des Verfahrens zur Herstellung des Folienverbundes aus mehreren Materialbahnen in einer Laminationsvorrichtung.

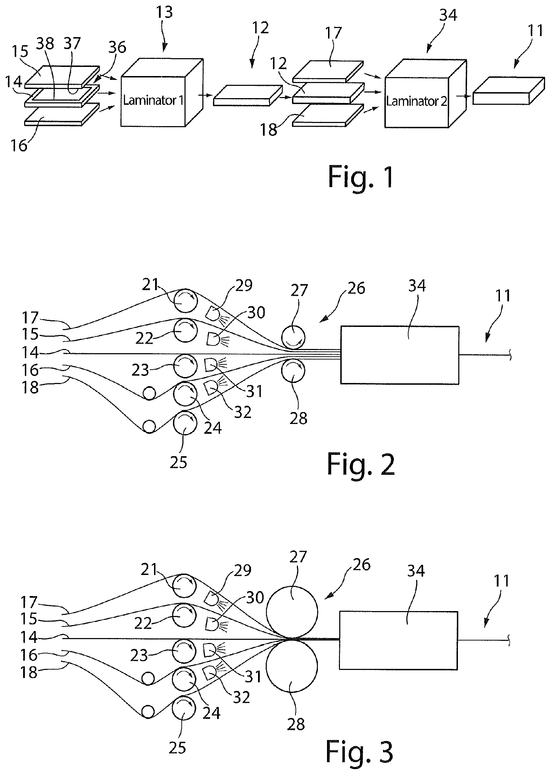

Die Figur 1 zeigt eine schematische Ansicht eines Verfahrens zur Herstellung eines Folienverbundes 11 aus mehreren Materialbahnen 14, 15, 16, 17, 18.

Bei diesem in Figur 1 dargestellten Herstellungsprozess wird der Folienverbund 11 beispielsweise in zwei Laminationsschritte unterteilt. In einem ersten Laminationsschritt wird eine Anzahl von Materialbahnen einem Vorlaminator 13 zugeführt, welcher gegenüber der Anzahl der Materialbahnen reduziert ist, welche den fertigen Folienverbund 11 bilden. Zumindest werden zwei Materialbahnen 14, 15 zugeführt. In Figur 1 ist beispielhaft dargestellt, dass drei Materialbahnen 14, 15, 16 zugeführt werden. Eine Materialbahn 14 kann beispielsweise elektronische Komponenten umfassen, wie beispielsweise ein IC-Modul 36, welches aus einem IC-Chip 37 und einer Antenne 38 besteht. Diese Materialbahnen 14, 15, 16 werden dem Vorlaminator 13 zugeführt, um daraufhin den Kartenkernverbund 12 zu bilden. Die Zuführung der verringerten Anzahl der Materialbahnen 14, 15, 16 gegenüber der vollständigen Anzahl der Materialbahnen 14, 15, 16, 17, 18, die für den Folienverbund 11 vorgesehen sind, weist den Vorteil auf, dass ein verringertes Volumen der übereinander liegenden Materialbahnen 14, 15, 16 aufzuheizen ist. Dadurch wird auch eine Beschleunigung des Laminationsprozesses in dem Vorlaminator 13 aufgrund der verringerten Anzahl an aufzuheizendem Materialbahnen 14, 15, 16 erzielt.

In dem nachfolgenden Laminationsschritt in einer Laminationsvorrichtung 34 können der Kartenkernverbund 12 sowie die restlichen Materialbahnen 17, 18 zur Bildung des Folienverbundes 11 zugeführt und miteinander laminiert werden.

Die Zuführung der Materialbahnen 14, 15, 16 zum Vorlaminator und darauffolgend die Zuführung des Kartenkernverbundes 12 mit den restlichen Materialbahnen 17, 18 zur Laminationsvorrichtung 34 kann unmittelbar und ohne Vorwärmung erfolgen. Alternativ können auch einzelne Materialbahnen 14, 15, 16, 17, 18 und/oder der Kartenkernverbund 12 vor dem Zuführen zum Vorlaminator 13 und/oder der Laminationsvorrichtung 34 durch zumindest ein Heizelement aufgeheizt werden, wie dies nachfolgend noch beschrieben sein wird.

Durch den zumindest zweistufigen Laminationsprozess kann eine Beschleunigung des Laminationsprozesses zum Folienverbund erzielt werden. Zudem können inhomogene Erhitzungen einzelner Schichten vermieden werden. Darüber hinaus kann eine spezifische Einstellung der Temperaturen für die Vorlamination des Kartenkernverbunds 12 und die Lamination zum Folienverbund 11 aufgrund der Aufteilung der Laminationsschritte in Anpassung an die Materialstärke der Materialbahn 14, 15, 16, 17, 18 erfolgen.

In Figur 2 ist eine schematische Ansicht einer alternativen Ausführungsform des Verfahrens zur Herstellung eines Folienverbundes 11 zu Figur 1 dargestellt. Diese Ausführungsform kann auch als zweiter Laminationsschritt bei dem in Figur 1 beschriebenen Herstellungsverfahren hergestellt sein. Bei dieser Ausführungsform gemäß Figur 2 werden die Materialbahnen 14, 15, 16, 17, 18 jeweils vorgewärmt der Laminationsvorrichtung 34 zugeführt und gemeinsam miteinander laminiert.

Die Materialbahnen 14, 15, 16, 17, 18 werden jeweils von einer nicht näher dargestellten Vorratsrolle abgezogen und jeweils einer Transportrolle 21, 22, 23, 24, 25 zugeführt. Von dieser Transportrolle 21, 22, 23, 24, 25 werden die Materialbahnen 14, 15, 16, 17, 18 einem Walzenpaar 26 zugeführt. Dieses Walzenpaar 26 weist zwei einander gegenüberliegende Walzen 27, 28 auf, deren Spaltbreite einstellbar ist. Durch dieses Walzenpaar 26 werden die Materialbahnen 14, 15, 16, 17, 18 zumindest eng aneinanderliegend zusammenführt. Zwischen den Transportrollen 21, 22, 23, 24, 25 und dem Walzenpaar 26 sind Heizelemente 29, 30, 31, 32 vorgesehen. Diese Heizelemente 29, 30, 31, 32 sind jeweils zwischen zwei benachbarten Materialbahnen 14, 15 und 15, 16 und 16, 17 und 17, 18 angeordnet, so dass diese Heizelemente 29, 30, 31, 32 jeweils die Oberflächen der beiden benachbarten Materialbahnen 14, 15, 16, 17, 18 zumindest vorwärmt. Zwischen den Transportrollen 21, 22, 23, 24, 25 und dem Walzenpaar 26 werden die Materialbahnen 14, 15, 16, 17, 18 freitragend geführt. Diese Materialbahnen 14, 15, 16, 17, 18 werden an den Heizelementen 29, 30, 31, 32 beispielsweise freischwebend entlanggeführt. Zusätzlich können nicht näher dargestellte Führungsrollen vorgesehen sein, um einen definierten Abstand der Materialbahnen 14, 15, 16, 17, 18 zu den Heizelementen 29, 30, 31, 32 sicher zu stellen.

Die dem Walzenpaar 26 zugeführten Materialbahnen 14, 15, 16, 17, 18 werden durch das Walzenpaar 26 zumindest eng aneinanderliegend positioniert. Darauffolgend werden die Materialschichten 14, 15, 16, 17, 18 einer Laminiervorrichtung 34 zugeführt. Die Materialbahnen 14, 15, 16, 17, 18 werden zu einem Folienverbund 11 laminiert, der darauffolgend aus der Laminationsvorrichtung 34 herausgeführt wird. Dieser Folienverbund 11 kann weiteren Bearbeitungsstationen unmittelbar zugeführt werden. Alternativ kann der Folienverbund 11 auf einer Rolle aufgewickelt und darauffolgend zur weiteren Bearbeitung bereitgestellt werden. Des Weiteren kann der Folienverbund 11 in ein Format geschnitten und/oder gestanzt werden.

Die in Figur 2 dargestellte Anzahl der Materialbahnen 14, 15, 16, 17, 18 ist nur beispielhaft. Es können wenigstens zwei, vorzugsweise wenigstens drei Materialbahnen vorgesehen sein, um einen Folienverbund 11 zu bilden.

Die Materialbahnen 14, 15, 16, 17, 18 bestehen beispielsweise aus einer Folie oder einer Schicht aus einem thermoplastischen Elastomer. Insbesondere bestehen diese aus einem organischen Polymerwerkstoff. Dieser organische Polymerwerkstoff kann ausgewählt werden aus einer Gruppe bestehend aus PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid), Polystyrol, Polyacrylate und Methacrylate, Vinylester, ABS und Copolymere solcher Polymere, Cycloolefin-Copolymere, Polysulfone, Polyester, PET, PEN, Polycarbonat/Polyester-Blends, zum Beispiel PC/Co-PET, Polycarbonat/Polycyclohexylmethanol-cyclohexandicarboxylat, insbesondere Polycarbonate oder Copolycarbonate auf Basis von Diphenolen, Poly- oder Copolyacrylate, Poly- oder Copolymethacrylate, Poly- oder Copolymere mit Styrol, thermoplastische Polyurethane, Polyolefine, Poly- oder Copolykondensate der Terephthalsäure oder Naphthalindicarbonsäure oder Mischungen aus diesen, besonders bevorzugt Polycarbonate oder Copolycarbonate auf Basis von Diphenolen, Poly- oder Copolyacrylate, Poly- oder Copolymethacrylate, Poly- oder Copolykondensate der Terephthalsäure oder Naphthalindicarbonsäure oder Mischungen aus diesen.

Des Weiteren kann vorgesehen sein, dass zumindest eine Materialbahn aus Papier oder einem papierähnlichen Werkstoff oder aus einem Papier-, Kunststoff-, Verbundwerkstoff ausgebildet ist. Eine oder mehrere Materialbahnen 14, 15, 16, 17, 18 können zumindest eine elektronische Komponente, wie beispielsweise einen Sensor, eine RFID, ein IC-Modul oder dergleichen umfassen.

Das zumindest eine Heizelement 29, 30, 31, 32 kann als Infrarotstrahlungsvorrichtung oder als Heißluftgebläse oder dergleichen ausgebildet sein.

Die Laminationsvorrichtung 34 kann als Rollenlaminat oder als Plattenlaminat ausgebildet sein.

In Figur 3 ist eine alternative Ausführungsform des Verfahrens zu Figur 2 dargestellt. Bei dieser Ausführungsform ist vorgesehen, dass das Walzenpaar 26 aus zwei beheizten Walzen 27, 28 besteht. Zusätzlich sind diese Walzen 27, 28 auf einen Walzenspalt eingestellt, bei dem die hindurchgeführten Materialbahnen 14, 15, 16, 17, 18 zusammengepresst werden. Dadurch werden gezielt die Hohlräume zwischen den Oberflächen der einzelnen Materialbahnen 14, 15, 16, 17, 18 entleert und ein nahezu vollständiges Aneinanderliegen der Oberflächen der einzelnen Materialbahnen 14, 15, 16, 17, 18 erzielt, bevor diese in die Laminationsvorrichtung 34 eingeführt werden. Die beheizten Walzen 27, 28 können auf eine Temperatur aufgeheizt sein, die im Bereich der Glasübergangstemperatur der jeweiligen Materialbahnen 14, 15, 16, 17, 18 liegt.

Durch das zumindest eine Heizelement 29, 30, 31, 32 kann eine Vorwärmung der Oberfläche der Materialbahnen 14, 15, 16, 17, 18 erfolgen, die vorzugsweise auf die Glasübergangstemperatur der jeweiligen Materialbahn 14, 15, 16, 17, 18 eingestellt ist oder geringfügig höher. Dadurch werden die Oberflächen der Materialbahnen 14, 15, 16, 17, 18 angeschmolzen, wodurch darauffolgend eine schnellere Lamination der einzelnen Materialbahnen 14, 15, 16, 17, 18 erfolgen kann.

Bei dem in Figur 2 und in Figur 3 dargestellten Verfahren zur Herstellung eines Folienverbundes 11 kann anstelle einer oder mehreren Materialbahnen 14, 15, 16, 17, 18 auch ein Teilverbund entsprechend einer Materialbahn 14, 15, 16, 17, 18 zugeführt werden. So kann beispielsweise in einem ersten Herstellungsschritt in einem Vorlaminator 3 gemäß Figur 1 der Laminationsvorrichtung 34 gemäß Figur 2 oder Figur 3 der Kartenkernverbund 12 für ein Wert- oder Sicherheitsdokument aus einer Anzahl von Materialbahnen 14, 15, 16, 17, 18 geschaffen werden, die um wenigstens eine Materialbahn geringer ausgebildet ist als der Folienverbund 11 beziehungsweise die Anzahl der Materialbahnen des Folienverbundes 11 für das Wert- oder Sicherheitsdokument ist. Anschließend wird dieser Kartenkernverbund 12 wie eine Materialbahn 14 zusammen mit weiteren Materialbahnen 15, 16, 17, 18 der Laminationsvorrichtung 34 oder einer weiteren Laminationsvorrichtung zugeführt, um daraufhin den Folienverbund 11 fertigzustellen.

### Bezugszeichenliste

| | | | |
|---|---|---|---|
| 11. | Folienverbund | 34. | Laminationsvorrichtung |
| 12. | Kartenkernverbund | 36. | IC-Modul |
| 14. | Materialbahn | 37. | IC-Chip |
| 15. | Materialbahn | 38. | Antenne |
| 16. | Materialbahn | | |
| 17. | Materialbahn | | |
| 18. | Materialbahn | | |
| 21. | Transportrolle | | |
| 22. | Transportrolle | | |
| 23. | Transportrolle | | |
| 24. | Transportrolle | | |
| 25. | Transportrolle | | |
| 26. | Walzenpaar | | |
| 27. | Walze | | |
| 28. | Walze | | |
| 29. | Heizelement | | |
| 30. | Heizelement | | |
| 31. | Heizelement | | |
| 32. | Heizelement | | |

## Patentansprüche

1. Verfahren zur Herstellung eines Folienverbundes (11) aus mehreren Materialbahnen (14, 15, 16, 17, 18) für ein Wert- oder Sicherheitsdokument,
- bei dem jede Materialbahn (14, 15, 16, 17, 18) entlang zumindest einer Transportrolle (21, 22, 23, 24, 25) transportiert und zumindest einer Laminationsvorrichtung (34) zugeführt werden,
- bei dem eine Anzahl von Materialbahnen (14, 15, 16, 17, 18), die geringer ist als die Anzahl der Materialbahnen, die den Folienverbund (11) bildet, jedoch zumindest zwei Materialbahnen (14, 15), einem Vorlaminator (13) zugeführt und zu einem Kartenkernverbund (12) miteinander laminiert werden, und
- bei dem der Kartenkernverbund (12) mit einer weiteren Anzahl der Materialbahnen (16, 17, 18) der zumindest einen Laminationsvorrichtung (34) zugeführt werden, die geringer als die restlichen Materialbahnen (16, 17, 18) ist oder der Anzahl der restlichen Materialbahnen (16, 17, 18) entspricht und zum Folienverbund (11) laminiert werden,
**dadurch gekennzeichnet,**
- **dass** zumindest zwei dem Vorlaminator (13) zugeführten Materialbahnen (14, 15, 16), die zu dem Kartenkernverbund (12) laminiert werden und die der Laminationsvorrichtung (34) zugeführte restliche Anzahl der Materialbahnen (17, 18) und der Kartenkernverbund (12) mit zumindest einem Heizelement (29, 30, 31, 32) vorgewärmt werden, und
- **dass** die zugeführte restliche Anzahl von Materialbahnen (17, 18 ) jeweils mit einer Transportrolle (21, 22, 23, 24, 25) der Laminationsvorrichtung (34) zugeführt werden und zwischen zwei benachbarten Materialbahnen (12, 17; 12,18) jeweils zumindest ein Heizelement (29, 30, 31, 32) positioniert wird, durch welches die aufeinander zuweisenden und zu laminierenden Oberflächen der benachbarten Materialbahnen (12,17; 12,18) vorgewärmt werden.

2. Verfahren nach Anspruch 1, **dadurch gekennzeichnet, dass** zumindest ein Heizelement (29, 30, 31, 32) zwischen der letzten Transportrolle (21, 22, 23, 24, 25) vor der Laminationsvorrichtung (34) und dem Walzenpaar (26) positioniert wird und die aufzuheizenden Oberflächen der Materialbahnen (17, 18) freischwebend an dem jeweiligen Heizelement (29, 32) vorbeigeführt werden.

3. Verfahren nach einem der vorhergehenden Ansprüche, **dadurch gekennzeichnet, dass** zwei oder mehrere Materialbahnen (17, 18) aus einem thermoplastischen Elastomer ausgebildet sind und dass das jeweilige Heizelement (29, 32) mit einer Heizleistung angesteuert wird, so dass die Oberfläche dieser Materialbahnen (17, 18) auf eine Temperatur vorgewärmt wird, die der Glasübergangstemperatur der jeweiligen Materialbahn (17, 18) entspricht oder höher ist.

4. Verfahren nach einem der vorhergehenden Ansprüche, **dadurch gekennzeichnet, dass** der Folienverbund (11) aus einem Kartenkernverbund (12) und weiteren Materialbahnen (16, 17, 18) ausgebildet wird, wobei der Kartenkernverbund (12), der aus wenigstens zwei Materialbahnen (14, 15) besteht und wobei die Materialbahn (14) mit zumindest einer elektrischen Komponente bestückt ist und die weitere Materialbahn (15) als Schutz- oder Deckschicht auf die zumindest eine Materialbahn (14) mit der zumindest einen elektrischen Komponente auflaminiert wird, in einem separaten Laminationsschritt in dem Vorlaminator (13) laminiert wird.

5. Verfahren nach Anspruch 4, **dadurch gekennzeichnet, dass** der Kartenkernverbund als eine Materialbahn (14) mit weiteren Materialbahnen (15, 16, 17, 18) zur Bildung eines Folienverbundes (11) in der Laminationsvorrichtung (34) zusammengeführt wird.

6. Verfahren nach einem der vorhergehenden Ansprüche, **dadurch gekennzeichnet, dass** die Materialbahnen (14, 15, 16, 17, 18) einem Rollen- oder Plattenlaminator als Laminationsvorrichtung (34) zugeführt werden.

7. Verfahren nach einem der vorhergehenden Ansprüche, **dadurch gekennzeichnet, dass** als Heizelement (29, 32) eine Infrarot-Strahlungsvorrichtung oder ein Heißluftgebläse eingesetzt wird.

## Claims

1. A method for producing a film composite (11) made of a plurality of material webs (14, 15, 16, 17, 18) for a document of value or security document,
- in which each material web (14, 15, 16, 17, 18) is transported along at least one transport roller (21, 22, 23, 24, 25) and is fed into at least one laminating device (34),
- in which material webs (14, 15, 16, 17, 18), the number of which is less than the number of material webs forming the film composite (11) but equals at least two material webs (14, 15), are fed into a prelaminator (13) and are laminated together so as to form a card core composite (12), and
- in which said card core composite (12) is fed into the at least one laminating device (34) together with a number of further material webs (16, 17, 18) which is smaller than that of the remaining material webs (16, 17, 18) or which is equal to the number of the remaining material webs (16, 17, 18) and said material webs are laminated together so as to form the film composite (11)
**characterised in that**
- at least two material webs (14, 15, 16) fed into the prelaminator (13) and laminated together to form the card core composite (12) and the remaining number of material webs (17, 18) fed into the laminating device (34) and said card core composite (12) are preheated using at least one heating element (29, 30, 31, 32), and
- the remaining number of supplied material webs (17, 18) are each fed into the laminating device (34) via a transport roller (21, 22, 23, 24, 25) and **in that** at least one heating element (29, 30, 31, 32) is positioned respectively between two adjacent material webs (12, 17; 12, 18) and is operative to preheat the surfaces of the adjacent material webs (12, 17; 12, 18) which face each other and which are to be laminated.

2. The method as claimed in claim 1, **characterised in that** at least one heating element (29, 30, 31, 32) is positioned between the last transport roller (21, 22, 23, 24, 25) located upstream of the laminating device (34) and the roller pair (26) and **in that** the surfaces of the material webs (17, 18) that are to be heated are fed past the respective heating element (29, 32) in a free-floating manner.

3. The method as claimed in any of the preceding claims, **characterised in that** two or more material webs (17, 18) are formed from a thermoplastic elastomer and **in that** the respective heating element (29, 32) is activated to provide a heat output allowing the surfaces of these material webs (17, 18) to be preheated to a temperature corresponding to, or superior to, the glass transition temperature of the respective material webs (17, 18).

4. The method as claimed in any of the preceding claims, **characterised in that** the film composite (11) is formed of a card core composite (12) and of further material webs (16, 17, 18), with the card core composite (12), which consists of at least two material webs (14, 15), being laminated together in the prelaminator (13) in a separate lamination step and with the material web (14) being fitted with at least one electrical component, and the further material web (15) being laminated onto said at least one material web (14) having the at least one electrical component so as to serve as a protective layer or covering layer.

5. The method as claimed in claim 4, **characterised in that** the card core composite constituting a material web (14) is brought together with further material webs (15, 16, 17, 18) and fed into the laminating device (34) for forming a film composite (11).

6. The method as claimed in any of the preceding claims, **characterised in that** the material webs (14, 15, 16, 17, 18) are fed into a laminating device (34) which is realised in the form of a roll laminator or a plate laminator.

7. The method as claimed in any of the preceding claims, **characterised in that** the heating element (29, 32) employed is an infrared radiation device or a hot-air blower.

## Revendications

1. Procédé destiné à fabriquer un composite de feuilles (11) à partir de plusieurs bandes de matériau (14, 15, 16, 17, 18) pour un document de valeur ou de sécurité, lors duquel
- chaque bande de matériau (14, 15, 16, 17, 18) est transportée le long d'au moins un galet de transport (21, 22, 23, 24, 25) et est amenée à au moins un dispositif de stratification (34),
- des bandes de matériau (14, 15, 16, 17, 18) dont le nombre est inférieur au nombre de bandes de matériau qui forment le composite de feuilles (11) mais qui est égal à au moins deux bandes de matériau (14, 15) sont amenées à un dispositif de pré-stratification (13) et sont assemblées par stratification pour former un composite de noyau de carte (12), et
- le composite de noyau de carte (12) est amené audit au moins un dispositif de stratification (34) avec d'autres bandes de matériau (16, 17, 18) dont le nombre est inférieur à celui des bandes de matériau restantes (16, 17, 18) ou qui correspond au nombre des bandes de matériau restantes (16, 17, 18) et est assemblé à celles-ci par stratification pour former le composite de feuilles (11), **caractérisé en ce que**
- au moins deux bandes de matériau (14, 15, 16) amenées au dispositif de pré-stratification (13), lesquelles sont assemblées par stratification pour former le composite de noyau de carte (12), et le nombre restant des bandes de matériau (17, 18) amenées au dispositif de stratification (34) ainsi que le composite de noyau de carte (12) sont préchauffés grâce à au moins un élément chauffant (29, 30, 31, 32), et
- le nombre restant de bandes de matériau amenées (17, 18) est amené au dispositif de stratification (34) respectivement grâce à un galet de transport (21, 22, 23, 24, 25) et **en ce qu'**entre deux bandes de matériau voisines (12, 17; 12,18) est positionné respectivement au moins un élément chauffant (29, 30, 31, 32) grâce auquel sont préchauffées les surfaces à stratifier tournées l'une vers l'autre desdites bandes de matériau voisines (12 ,17; 12, 18) .

2. Procédé selon la revendication 1, **caractérisé en ce qu'**au moins un élément chauffant (29, 30, 31, 32) est positionné entre le dernier galet de transport (21, 22, 23, 24, 25) situé avant le dispositif de stratification (34) et la paire de rouleaux (26) et **en ce que** les surfaces à chauffer des bandes de matériau (17, 18) passent de manière flottante au niveau de l'élément chauffant respectif (29, 32).

3. Procédé selon l'une quelconque des revendications précédentes, **caractérisé en ce que** deux ou plusieurs bandes de matériau (17, 18) sont réalisées en un élastomère thermoplastique et que l'élément chauffant respectif (29, 32) est activé avec une puissance de chauffage telle que la surface desdites bandes de matériau (17, 18) sont préchauffées à une température qui correspond à la température de transition vitreuse de la bande de matériau respective (17, 18) ou qui est supérieure à celle-ci.

4. Procédé selon l'une quelconque des revendications précédentes, **caractérisé en ce que** le composite de feuilles (11) est formé d'un composite de noyau de carte (12) et d'autres bandes de matériau (16, 17, 18), le composite de noyau de carte (12) qui est constitué d'au moins deux bandes de matériau (14, 15) étant réalisé par stratification dans le dispositif de pré-stratification (13) dans une étape de stratification séparée, et la bande de matériau (14) étant équipée d'au moins un composant électrique et l'autre bande de matériau (15) étant assemblée par stratification, en tant que couche de protection ou de recouvrement, sur ladite au moins une bande de matériau (14) équipée dudit au moins un composant électrique.

5. Procédé selon la revendication 4, **caractérisé en ce que** le composite de noyau de carte est réuni, sous la forme d'une bande de matériau (14), à d'autres bandes de matériau (15, 16, 17, 18) dans le dispositif de stratification (34) en vue de former un composite de feuilles (11).

6. Procédé selon l'une quelconque des revendications précédentes, **caractérisé en ce que** les bandes de matériau (14, 15, 16, 17, 18) sont amenées à un dispositif de stratification (34) réalisé en tant machine à stratifier à rouleaux ou à plateaux.

7. Procédé selon l'une quelconque des revendications précédentes, **caractérisé en ce qu'**un dispositif de rayonnement infrarouge ou une soufflante à air chaud est utilisé(e) en tant qu'élément chauffant (29, 32) .
